# EUROPÄISCHE PATENTANMELDUNG

(11) **EP 0 756 429 A2**
(43) Veröffentlichungstag der Anmeldung: **29.01.1997**
(21) Anmeldenummer: 96111764.5
(22) Anmeldetag: 22.07.1996
(51) Int. Cl.: H04Q 3/62

(54) **Netzwerkemulator für private Kommunikationsendeinrichtungen**

(30) Priorität: 28.07.1995 DE 19527806
(71) Anmelder: SIEMENS AKTIENGESELLSCHAFT, 80333 München (DE)
(72) Erfinder: Müller, Henrik, 81249 München (DE)

(57) **Zusammenfassung**

Einem privaten Kommunikationssystem (KS) und einem zugeordneten, nicht direkt anschließbaren, d.h. "außenliegenden" privaten Kommunikationsendgerät (KE) ist jeweils eine Endgeräte-Emulationseinrichtung (KPNE) zugeordnet. Dieses Endgeräte-Emulationseinrichtungspaar (PNEP) ist zumindest über ein öffentliches Wähl-Kommunikationsnetz (FE,ISDN,IDN) miteinander verbindbar, wobei die Verbindung zumindest eines Nachrichtenpfades (B) und eines zusätzlichen Signalisierungspfades (DZ) über das öffentliche Wähl-Kommuniktionsnetz (FE,ISDN,IDN) gesteuert und die endgeräte-emulationseinrichtungspaargerechte Vermittlung der Pfade (B,DZ) überprüft wird. Mit Hilfe des erfindungsgemäßen Endgeräte-Emulationseinrichtungspaares (PNEP) können "alleinstehende bzw. außenliegende" Kommuikationsendgeräte (KE) ohne Verminderung des Leistungsmerkmalsumfangs privater Kommunikationsnetze PKN) angeschlossen werden. Durch die Überprüfung der endgeräte-emulationseinrichtungspaargerechten Verbindung mit Hilfe einer speziellen Überprüfungsprozedur werden Fehlverbindungen und Fehlsignalisierungen vermieden.

## Beschreibung

Die Erfindung betrifft eine Kommunikationsanordnung mit einem privaten Kommunikationssystem, dem nicht direkt anschließbare, private Kommunikationsendgeräte zugeordnet sind.

Private Kommunikationsnetze sind durch private Kommunikationssysteme gebildet, die untereinander teil- oder vollvermascht sind. Die Vermaschung der privaten Kommunikationssysteme wird teilweise über private Grundstücke und teilweise über öffentliche Kommunikationsnetze erreicht. Öffentliche Kommunikationsnetze stellen insbesondere das öffentliche analoge und das diensteintegrierende digitale Fernsprechkommunikationsnetz - in der Fachwelt als ISDN-Netz bekannt - sowie digitale Datennetze - z.B. das Paketnetz oder ein synchrones Durchschaltenetz - dar. Hierbei können die privaten Kommunikationssysteme hinsichtlich ihrer Ausbaugröße unterschiedlich ausgestaltet sein, jedoch ist in dem privaten Kommunikationsnetz eine einheitliche Signalisierung vorgesehen. Da die Signalisierung in privaten Kommunikationsnetzen gegenüber der Signalisierung in den Öffentlichen Kommunikationsnetzen erheblich mehr Signalisierungsvarianten - insbesondere durch die zusätzliche Leistungsmerkmalsteuerung verursacht - aufweist und folglich zusätzliche Signalisierungsinformationen zu übermitteln sind, sind zusätzliche, über die öffentlichen Kommunikationsnetze geführte Signalisierungspfade bzw. Signalisierungskanäle erforderlich. Aus der EP 0 642 282 A1 ist bekannt, zwischen Kommunkationssystemen den zusätzlichen Signalisierungspfad mit Hilfe einer zusätzlichen Einrichtung über ein analoges Fernsprechkommunikationsnetz, über einen separaten Kanal eines Datenkommunikationsnetzes oder einer Überlagerungsverbindung über eine Fernsprechverbindung zu realisieren.

In privaten Kommunikationsnetzen sind des weiteren "alleinstehende" bzw. einige Kommunikationsendgeräte, d.h. Kommunikationsendgeräte die nicht über private Grundstücke mit einem Kommunikationssystem verbunden werden können, an ein privates Kommunikationssystem anzuschließen. Hierbei sollen jedoch die vorteilhaften, zusätzlichen Leistungsmerkmale eines privaten Kommunikationsnetzes erhaltene bleiben. Bisher sind für den Anschluß derartiger "alleinstehender" Kommunikationsendgeräte exklusiv genutzte Übertragungsleitungen, d.h. festgeschaltete Verbindungen in öffentlichen Kommunikationsnetzen, für den Anschluß an ein Kommunikationssystem vorgesehen. Derartige exklusive Leitungen sind für eine Übermittlung von Informationen uneingeschränkt verfügbar und sind intrusionssicher, da jede Verbindung auf einer exklusiv genutzten Leitung eindeutig nur von einem eigenen Kommunikationssystem des privaten Kommunikationsnetzes erreicht wird. Die Exklusivität der Übertragungsleitungen bedeutet jedoch einen erheblichen finanziellen Grundaufwand für den Anschluß eines "alleinstehenden" Kommunikationsendgerätes. Des weiteren ist bekannt, derartige "alleinstehende" Kommunikationsendgeräte über Wählverbindungen eines öffentlichen Kommunikationsnetzes an ein privates Kommunikationssystem heranzuführen. Dies bedeutet jedoch eine erhebliche Einschränkung der durch das Kommunikationsendgerät nutzbaren Leistungsmerkmale und zusätzlich ist aufgrund von Signalisierungsfehlern oder Fehlsteuerungen in den öffentlichen Kommunikationsnetzen keine eindeutige Zuordnung privates Kommunikationssystem zu privaten Kommunikationsendgeräten mehr möglich.

Der Erfindung liegt die Aufgabe zugrunde, "alleinstehende bzw. außenliegende" Kommunikationsendgeräte kostengünstig an ein privates Kommunikationssystem anzuschließen, wobei die vorteilhaften Leistungsmerkmale eines privaten Kommunikationsnetzes erhalten bleiben sollen. Die Aufgabe wird ausgehend von einer Kommunikationsanordnung gemäß den Merkmalen des Oberbegriffs des Patentanspruchs 1 durch dessen kennzeichnende Merkmale gelöst.

Der wesentliche Aspekt der erfindungsgemäßen Kommunikationsanordnung ist darin zu sehen, daß das private Kommunikationssystem und das zugeordnete private Kommunikationsendgerät jeweils mit einer Endgeräte-Emulationseinrichtung verbunden ist und die dem Kommunikationsendgerät und die dem Kommunikationssystem zugeordnete Endgeräte-Emulationseinrichtung ein Endgeräte-Emulationseinrichtungspaar bilden und jeweils zumindest über einen Anschluß an zumindest ein öffentliches Wähl-Kommunikationsnetz angeschlossen sind. Im Endgeräte-Emulationseinrichtungspaar sind Mittel zur automatischen Verbindungsherstellung über das öffentliche Wähl-Kommunikationsnetz vorgesehen, wobei durch die Mittel die Verbindung zumindest eines Nachrichtenpfades und eines zusätzlichen Signalisierungspfades über das öffentliche Wähl-Kommuniktionsnetz (KN) gesteuert und die endgeräte-emulationseinrichtungspaar-gerechte (PNEP) Vermittlung der Pfade überprüft wird. Mit Hilfe des erfindungsgemäßen Endgeräte-Emulationseinrichtungspaars können "alleinstehende bzw. außenliegende" Kommunikationsendgeräte ohne Verminderung der Leistungsmerkmale privater Kommunikationsnetze angeschlossen werden. Ein weiterer Vorteil der erfindungsgemäßen Kommunikationsanordnung ist darin zu sehen, daß die Endgeräte-Emulationseinrichtungen einen direkten Zugriff in das angeschlossene öffentliche Wähl-Kommunikationsnetz das für jeweils zugeordnete Kommunikationsendgeräte steuern kann, wobei eine Reduzierung des Leistungsmerkmalumfangs zu berücksichtigen ist. Durch die Überprüfung der endgeräte-emulationseinrichtungspaargerechten Verbindung mit Hilfe einer speziellen Überprüfungsprozedur werden Fehlverbindungen und Fehlsignalisierungen vermieden.

Weitere vorteilhafte Ausgestaltungen der erfindungsgemäßen Endgeräte-Eniulationseinrichtungen sind den weiteren Ansprüchen zu entnehmen, wobei die vorteilhaften Ausgestaltungen auf unterschiedliche Typen von Kommunikationsendgeräten - analog oder digital -, unterschiedliche öffentliche Kommunikationsnetze - öffentliches analoges oder digitales Fernsprechnetz oder öffentliches Datennetz - sowie unterschiedliche Realisierungen des zusätzlichen Signalisierungspfades für die Übermittlung der zusätzlichen Signalisierungen und auf unterschiedliche Überprüfungsprozeduren bezogen sind.

Im folgenden wird die erfindungsgemäße Kommunikationsanordnung anhand von vier Blockschaltbildern näher erläutert. Dabei zeigen
- FIG 1: ein Endgeräte-Emulationseinrichtungspaar für analoge Kommunikationsendgeräte über ein analoges öffentliches Fernsprechkommunikationsnetz,
- FIG 2: ein Endgeräte-Emulationseinrichtungspaar für analoge Kommunikationsendgeräte über ein diensteintegrierendes, digitales Fernsprechkommunikationsnetz,
- FIG 3: ein Endgeräte-Emulationseinrichtungspaar für digitale Kommunikationsendgeräte über ein diensteintegrierendes, digitales Fernsprechkommunikationsnetz, und
- FIG 4: ein Endgeräte-Emulationseinrichtungspaar für digitale Kommunikationsendgeräte über ein analoges Fernsprechkommunikationsnetz.

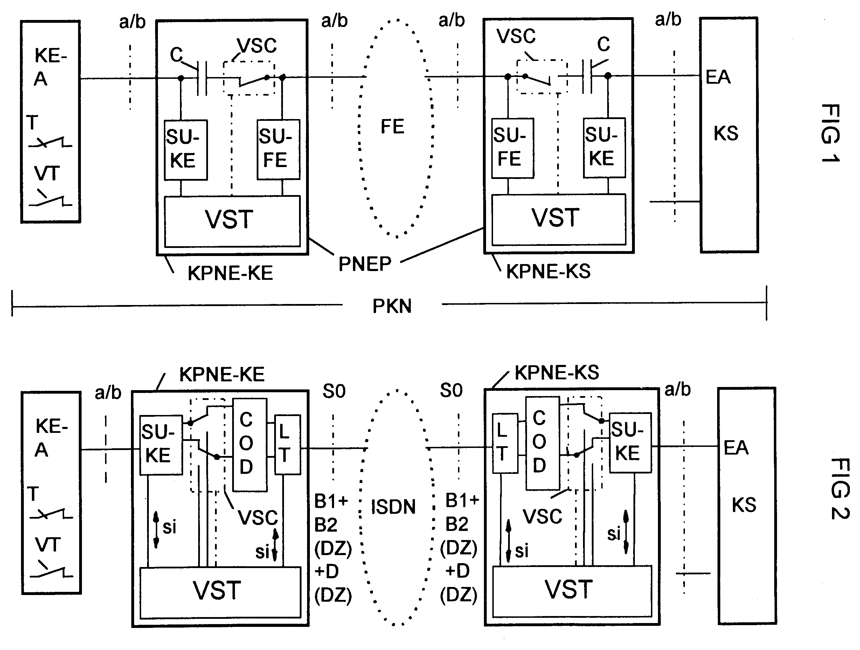

FIG 1 zeigt ein privates Kommunikationssystem KS, an das über eine analoge Schnittstelle a/b eine Endgeräte-Emulationseinrichtung KPNE-KS angeschlossen ist. An diese analoge Schnittstelle a/b ist über eine nicht dargestellte Anschlußleitung üblicherweise direkt ein eine analoge Schnittstelle a/b aufweisendes analoges Kommunikationsendgerät KE-A angeschlossen. Bei der erfindungsgemäßen Kommunikationsanordnung ist die analoge Schnittstelle a/b des Kommunikationsendgerätes KE-A mit einer weiteren Endgeräte-Emulationseinrichtung KPNE-KE verbunden. Die Kommunikationssystem- und kommunikationsendgeräteseitige Endgeräte-Emulationseinrichtung KPNE-KE, KPNE-KS bilden zusammen ein Endgeräte-Emulationseinrichtungspaar PENP.

Beide Endgeräte-Emulationseinrichtungen KPNE-KE,KS sind jeweils über eine analoge Schnittstelle a/b - ebenfalls durch strichpunktierte Linien angedeutet - mit dem öffentlichen, analogen Fernsprechkommunikationsnetz FE - durch strichlierte Linien umfaßt - verbunden.

Vom analogen Kommunikationsendgerät KE-A sind zwei unterschiedliche Verbindungsanforderungen möglich. Dies ist zum einen eine Verbindungsanforderung zum zugeordneten privaten Kommunikationssystem KS und zum anderen eine Verbindungsanforderung ins öffentliche analoge Fernsprechkommunikationsnetz FE ohne Mitwirkung des zugeordneten Kommunikationssystems KS, wobei eine Verbindungsanforderung ins öffentliche analoge Fernsprechkommunikationsnetz FE für den Anschluß eines analogen Kommunikationsendgerätes KE-A an ihr Kommunikationssystem KS unzulässig sein kann und folglich optional vorhersehbar ist.

Für das Ausführungsbeispiel wird angenommen, daß bei einer Verbindungsinitialisierung eine Verbindung im privaten Kommunikationsnetz PKN, d.h. zum zugeordneten, privaten Kommunikationssystem KS oder umgekehrt angefordert wird. Die durch einen Schleifenschluß im Kommunikationsendgerät KE eingeleitete Verbindungsanforderung wird in der Endgeräte-Emulationseinrichtung KPNE-KE mit Hilfe einer Signalisierungseinheit SU erfaßt und automatisch eine Verbindungsaufbauprozedur, d.h. eine Wahlprozedur über das öffentliche Fernsprechkommunikationsnetz FE zur kommunikationssystemseitigen Endgeräte-Emulationseinrichtung KPNE-KS mit Hilfe der in den Endgeräte-Emulationseinrichtungen KPNE vorgesehenen Signalisierungseinheiten SU-FE und der Verbindungssteuerung VST eingeleitet. Der Verbindungsaufbau wird mit einer im Mehrfrequenzverfahren (MFV)-Verfahren übermittelten Rufnummer durchgeführt. Nach einer anschließend erläuterten Überprüfungsprozedur wird von der endgeräteseitigen Endgeräte-Emulationseinrichtung KPNE-KE das Freizeichen des privaten Kommunikationsnetzes an das analoge Kommunikationsendgerät KE übermittelt. Bei einem Fernsprech-Kommunikationsendgerät KE ist nun dessen Sprechkreis direkt mit dem privaten Kommunikationssystem KS verbunden. Im weiteren Verlauf der Verbindung kann das Kommunikationsendgerät KE-A mittels zusätzlicher Tasten - durch eine im Kommunikationsendgerät KE dargestellte Taste T angedeutet - zusätzliche, im öffentlichen analogen Fernsprechkommunikationsnetz FE nicht vorgesehene Leistungsmerkmale steuern. Hierbei werden die zusätzlichen Informationen mit Hilfe des Mehrfrequenzverfahrens übermittelt.

Bei einer Verbindungsanforderung direkt in das öffentliche Fernsprechkommunikationsnetz FE ist im Kommunikationsendgerät KE-A eine zusätzliche vermittlungstechnische Taste VT vorzusehen. Bei deren Betätigung wird der kommunikationsendgeräteseitigen Endgeräte-Emulationseinrichtung KPNE-KE angezeigt, daß eine Wähl-Verbindung direkt in das öffentliche analoge Fernsprechkommunikationsnetz FE angefordert wird. Dies bedeutet, daß die vom Kommunikationsendgerät KE übermittelte Signalisierung direkt an das öffentliche analoge Fernsprechkommunikationsnetz FE weitergegeben wird. Der in den Endgeräte-Emulationseinrichtungen KPNE vorgesehene Kondensator C dient der gleichstrommäßigen Trennung und der Schalter VSC der Entkopplung des Nachrichten- und Signalisierungspfades.

Im Rahmen der Überprüfungsprozedur wird von der kommunikationsendgeräteseitigen Endgeräte-Emulationseinrichtung KPNE-KE über die aufgebaute Verbindung eine Zählinformation - z.B. laufende Nummer der Verbindung - und eine festgelegte Anschlußkennung - kennzeichnet die private Anschlußleitung - verschlüsselt mittels MFV-Zeichen zur kommunikationsseitigen Endgeräte-Emulationseinrichtung KPNE-KS übermittelt. Stimmen die übermittelten Informationen mit den erwarteten Informationen überein, wird ein Freizeichen an die kommunikationsendgeräteseitige Endgeräte-Emulationseinrichtung KPNE-KE übermittelt. Dies wird als Quittung gewertet, worauf die Verbindung zum Kommunikationsendgerät KE-A durchgeschaltet und die laufende Nummer um einen vorgegebenen Wert erhöht wird.

Bei mit digitalen Vermittlungseinrichtungen ausgestatteten öffentlichen analogen Fernsprechkommunikationsnetzen FE kann die Rufnummer des jeweils rufenden zum gerufenen Kommunikationsendgerät übermittelt werden. Anhand dieser Rufnummern kann eine Überprüfung der korrekten Verbindung durchgeführt werden. Die Überprüfungsprozedur kann zusätzlich vorteilhaft ablaufen, da hierdurch der durchgeschaltete Verbindungsweg, d.h. der Nachrichtenpfad zusätzlich überprüft wird.

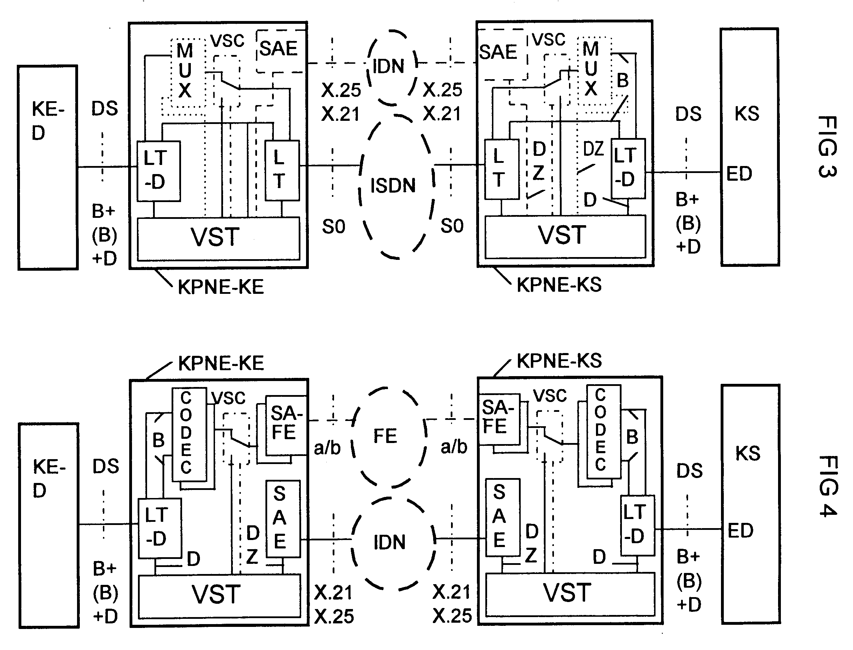

FIG 2 zeigt ebenfalls ein privates, analoges Kommunikationsendgerät KE-A, das einem privaten Kommunikationssystem KS zugeordnet ist, wobei die Verbindung nicht über das öffentliche analoge Fernsprechkommunikationsnetz FE sondern über das diensteintegrierende digitale Fernsprechkommunikationsnetz ISDN geführt wird. Hierzu sind Endgeräte-Emulationseinrichtungen KPNE vorgesehen, die mit dem Kommunikationsendgerät KE-A bzw. dem Kommunikationssystem KS jeweils über eine analoge Signalisierungseinheit SU-KE verbunden sind. Diese analoge Signalisierungseinheit SU-KE ist über zwei Verbindungsschalter VSC mit einer Codec-Einrichtung CODEC verbunden. Eine die Verbindungsschalter VSC mit der analogen Signalisierungseinheit SU-KE und mit einer Anschlußeinheit LT verbundene Verbindungssteuerung VST setzt die vom Kommunikationsendgerät KE-A übermittelten Signalisierungsinformationen si in ISDN-konforme Signalisierungsinformationen si um bzw. steuert den automatischen Verbindungsaufbau der jeweils zugeordneten Endgeräte-Emulationseinrichtung KPNE. Die Anschlußeinheit LT ist des weiteren mit der Codec-Einrichtung CODEC verbunden. Der Anschluß an das ISDN-Netz ISDN wird durch eine in der Anschlußeinheit LT realisierte S0-Schnittstelle S0 - durch strichpunktierte Linien angedeutet - durchgeführt. Die S0-Schnitstelle S0 umfaßt zwei Nachrichtenkanäle B1,2 mit je 64 kbit/s und einen Signalisierungkanal D mit 16 kbit/s.

Bei einer Verbindungsanforderung wird automatisch ein Verbindungsaufbau, eine Wahlprozedur zur jeweils zugeordneten Endgeräte-Einulationseinrichtung KPNE eingeleitet und eine Überprüfung anhand der vom ISDN-Kommunikationsnetz ISDN übermittelten Rufnummern sowie die in FIG 1 erläuterte Überprüfungsprozedur durchgeführt. Die vor und während eines Verbindungsaufbaus zu übermittelnden zusätzlichen Signalisierungsinformationen si zur Realisierung zusätzlicher, in privaten Kommunikationsnetzen PKN vorgesehenen Leistungsmerkmalen werden über einen zusätzlichen Signalisierungspfad DZ, d.h. über den zweiten im ISDN-Netz ISDN vorgesehenen Nachrichtenkanal B2 oder über den Paketdienst bzw. Paketkanal des Signalisierungskanals - D-Kanals - des ISDN-Basisanschlusses S0 übermittelt. Die hierfür vorgesehenen Signalisierungsinformationen si werden in der Verbindungssteuerung VST entsprechend gebildet und an die Anschlußeinheit LT übermittelt. In dieser Anschlußeinheit LT werden die Nachrichten- und Signalisierungskanäle B1, 2, D zu einem Summenbitstrom gemultiplext und an die physikalischen Bedingungen der S0-Schnittstelle S0 angepaßt.

FIG 3 zeigt ein digitales, privates Kommunikationsendgerät KE-D, das einem privaten Kommunikationssystem KS zugeordnet ist. Sowohl das Kommunikationsendgerät KE-D als auch das Kommunikationssystem KS weisen jeweils eine digitale Schnittstelle DS - durch strichpunktierte Linien angedeutet - auf. Die digitale Schnittstelle DS umfaßt einen digitalen oder zwei digitale Nachrichtenkanäle B+(B) und einen digitalen Signalisierungskanal D. Digitale Schnittstellen DS mit zwei Nachrichtenkanälen B+(B) und einem Signalisierungskanal B stellen beispielsweise S0-Schnittstellen des diensteintegrierenden digitalen Fernsprechkommunikationsnetzes ISDN dar. Digitale Schnittstellen DS mit einem Nachrichtenkanal B und einem Signalisierungskanal D werden insbesondere in privaten Kommunikationsnetzen KPN eingesetzt.

Die digitale Schnittstelle DS ist sowohl in der Kommunikationssystem- als auch in der kommunikationsendgeräteseitigen Endgeräte-Emulationseinrichtung KNPE-E, KNPE-KS in einer Anschalteeinheit LT-D realisiert. In dieser wird der Signalisierungskanal D abgetrennt und an eine Verbindungssteuerung VST geführt. Der mindestens eine Nachrichtenkanal B wird über einen Vermittlungsschalter VSC an eine weitere Anschlußeinheit LT geführt, die eine ISDN-Basisschnittstelle, d.h. eine S0-Schnittstelle S0 aufweist. In der Anschlußeinheit LT wird der von der Verbindungssteuerung VST herangeführte ISDN-Signalisierungskanal DI zu einem ISDN-gerechten Datenstrom gemultiplext und an die physikalischen Bedingungen der S0-Schnittstelle S0 angepaßt. Die von der Anschlußeinheit LT zur digitalen Anschlußeinheit LT-D gerichteten Nachrichtenkanäle B sind direkt geschaltet und zusätzlich auf die Verbindungssteuerung VST geführt. Die S0-Schnittstelle S0 der Endgeräte-Emulationseinrichtungen KPNE sind mit Anschlüssen des öffentlichen diensteintegrierenden digitalen Fernsprechkommunikationsnetzes ISDN verbunden.

Bei einer Kommunikationsendgeräte- oder kommunikationssystemseitigen durch eine im Signalisierungskanal D übermittelten Anrufinformation eingeleiteten Verbindungsanforderung werden die übermittelten Wählzeichen zwischengespeichert und eine Verbindung über das ISDN-Netz ISDN zur kommunikationssystemseitigen Endgeräte-Emulationseinrichtung KPNE-KS aufgebaut. Hierbei wird die vom ISDN-Netz ISDN übermittelte Anschlußrufnummer der kommunikationsendgeräteseitigen Endgeräte-Emulationseinrichtung KPNE-KE auf Übereinstimmung mit der erwarteten Anschlußrufnummer überprüft. Anschließend wird die bereits beschriebene Überprüfungsprozedur, jetzt jedoch mit digitalen Informationssignalen durchgeführt um die Korrelation des Nutz- und Signalisierungskanals zu überprüfen. Nach Ablauf der Überprüfungsprozedur wird das Freizeichen des privaten Kommunikationsnetzes KNP an das digitale Kommunikationsendgerät KE geführt, worauf die zwischengespeicherten Wählzeichen über das ISDN-Netz an das Kommunikationssystem übermittelt werden.

Die Übermittlung der auf das private Kommunikationsnetz KPN bezogenen Signalisierungsinformationen kann über drei unterschiedlich realisierte Signalisierungspfade, d.h. Signalisierungskanäle DZ erfolgen:
a) Bei Kommunikationsendgeräten KE mit nur einem Nachrichtenkanal B kann der zusätzliche Signalisierungskanal DZ im zweiten Nachrichtenkanal B2 realisiert sein. Hierzu werden von der Verbindungssteuerung VST die entsprechenden Signalisierungsinformationen gebildet und gesendet bzw. empfangen.
b) Der zusätzliche Signalisierungskanal DZ wird im Paketdienst des Signalisierungskanals D des ISDN-Basisanschlusses, d.h. der S0-Schnittstelle S0 des ISDN-Netzes ISDN realisiert. Bei dieser Realisierung wird der zusätzliche Signalisierungskanal DZ von der Verbindungssteuerung VST an die Leistungseinheit LT geschaltet.
c) Der zusätzliche Signalisierungskanal DZ wird über eine weitere Signalisierungsanschlußeinheit SAE über ein öffentliches Datenkommunikationsnetz IDN realisiert - durch gestrichelte Linie und die möglichen Schnittstellen X.25,X.21 in FIG 3 angedeutet.
d) Der zusätzliche Signalisierungskanal DZ wird mit Hilfe einer Multiplexeinrichtung MUX durch strichlierte Linien angedeutet - zusätzlich in einen der beiden Nachrichtenkanäle B gemultiplext. Hierzu ist ein Komprimieren einer der beiden Nachrichtenkanäle B1, B2 erforderlich - z.B. von 64 kBit/s in 56 kBit/s. Die zusätzlichen Signalisierungsinformationen werden dann im zusätzlichen Signalisierungskanal DZ beispielsweise mit 8 kBit/s übermittelt.

Bei Kommunikationsendgeräten KE-D mit zwei Nachrichtenkanälen B1, B2 sind die Realisierungsvarianten B bis D vorgesehen.

FIG 4 zeigt ebenfalls ein Kommunikationsendgerät KE-D und ein Kommunikationssystem KS mit einer digitalen Schnittstelle DS mit ein oder zwei Nachrichtenkanälen B1, B2 und einen Signalisierungskanal D. Diese beiden Datenschnittstellen DS sind jeweils mit einer Kommunikationssystem- und einem kommunikationsendgeräteseitigen Endgeräte-Emulationseinrichtung , KPNE-KS, KPNE-KE verbunden und in dieser auf eine digitale Anschlußeinheit LT-D geführt. In dieser wird der Signalisierungskanal D abgetrennt und an eine Verbindungssteuerung VST geführt. Der zumindest eine Nachrichtenkanal B1, B2 ist zumindest auf eine Codec-Einrichtung CODEC geschaltet - die zweite Einrichtung ist durch gestrichelte Linien angedeutet. Der zumindest eine, zum Kommunikationssystem KS gerichtete Nachrichtenkanal B1, B2 ist über einen Vermittlungsschalter VSC an eine Signalisierungseinheit SA-FE geführt. Der zum Kommunikationsendgerät KE-D gerichtete Nachrichtenkanal B1, B2 wird zwischen der Signalisierungseinheit SA-FE und der Codec-Einrichtung CODEC mit Hilfe eines Vermittlungsschalters VSC geschaltet und auf die Verbindungssteuerung VST geführt, wozu ein weiterer Eingang des Vermittlungsschalters VSC mit der Verbindungssteuerung VST verbunden ist, wobei der Vermittlungsschalter VSC durch die Verbindungssteuerung VST geschaltet wird - durch strichpunktierte Linien angedeutet.

Bei einer Kommunikationsendgeräte- oder kommunikationssystemseitigen, durch eine Signalisierungsinformation im Signalisierungskanal D übermittelte Verbindungsanforderung werden je nach Anzahl der Nachrichtenkanäle B1 oder B2 automatisch zwei Verbindungen über das öffentliche analoge Fernsprechkommunikationsnetz FE oder eine Verbindung über das öffentliche Fernsprechnetz FE und eine Verbindung über das öffentliche Datennetz IDN zur zugeordneten Endgeräte-Emulationseinrichtung KPNE aufgebaut. Bei öffentlichen Fernsprechkommunikationsnetzen FE mit digitalen Vermittlungseinrichtungen sowie im öffentlichen digitalen Datennetz IDN wird der korrekte Verbindungsaufbau anhand der übermittelnden Rufnummern der rufenden Kommunikationsendgeräte KE-D überprüft. Nach dem Verbindungsaufbau wird die Überprüfungsprozedur - wie in FIG 1 bis 3 beschrieben - abgewickelt. Anschließend werden die zwischengespeicherten "privaten" Wählziffern über die Verbindung über das öffentliche Datennetz IDN an das Kommunikationssystem KS übermittelt. Weitere Signalisierungssteuerungen werden während der Verbindung ebenfalls über die Verbindung im öffentlichen Datennetz IDN übertragen. Alternativ - nicht dargestellt - ist für die Übermittlung der Signalisierungsinformationen eine weitere Verbindung, d.h. ein weiterer Signalisierungspfad DZ über das öffentliche analoge Fernsprechkommunikationsnetz FE möglich. Hierbei sind die Signalisierungsinformationen mittels einer Modem-Einrichtung - nicht dargestellt - an die im öffentlichen Fernsprechkommunikationsnetz FE vorgegebene Übertragungsform anzupassen. Hierzu sind die Endgeräte-Emulationseinrichtungen KPNE jeweils mit einer weiteren Signalisierungseinheit SA-FE - durch strichlinierte Linien dargestellt - auszustatten, wobei die Signalisierungseinrichtung SAE für den Anschluß an das öffentliche Datennetz IDN entfällt. Bei einer "In Band" Übermittlung der Signalisierungsinformationen sind nicht dargestellte Komprimierungs- und Dekomprimierungseinheiten KOMP sowie Multiplexer MUX erforderlich, deren Funktionen in FIG 3 beschrieben sind. Bei dieser Realisierungsvariante entfällt ebenfalls die Anschlußeinheit SAE.

## Patentansprüche

1. Kommunikationsanordnung mit einem privaten Kommunikationssystemen (KS), dem nicht direkt anschließbare, private Kommunikationsendgeräte (KE) zugeordnet sind,
dadurch **gekennzeichnet,**
- daß das private Kommunikationssystem (KS) und das zugeordnete private Kommunikationsendgerät (KE) jeweils mit einer Endgeräte-Emulationseinrichtung (KPNE) verbunden ist,
- daß die dem Kommunikationsendgerät (KE) und die dem Kommunikationssystem (KS) zugeordnete Endgeräte-Emulationseinrichtung (KPNE-KS,KE) ein Endgeräte-Emulationseinrichtungspaar (PNEP) bilden und jeweils zumindest über einen Anschluß an zumindest ein öffentliches Wähl-Kommunikationsnetz (FE,ISDN,IDN) angeschlossen sind, und
- daß im Endgeräte-Emulationseinrichtungspaar (PNEP) Mittel (VST,SU-FE,LT,SAE,SA-FE) zur automatischen Verbindungsherstellung über das öffentliche Wähl-Kommunikationsnetz (FE,ISDN,IDN) vorgesehen sind, wobei durch die Mittel (VST,SU-FE,LT,SAE,SA-FE)
-- die Verbindung zumindest eines Nachrichtenpfades (B) und eines zusätzlichen Signalisierungspfades (DZ) über das öffentliche Wähl-Kommuniktionsnetz (FE,ISDN,IDN) gesteuert und
-- die endgeräte-emulationseinrichtungspaar-gerechte Vermittlung der Pfade (B,DZ) überprüft wird.

2. Anordnung nach Anspruch 1,
dadurch **gekennzeichnet,**
- daß in der kommunikationsendgeräteseitigen Endgeräte-Emulationseinrichtung (KPNE-KE) eine Anschlußeinrichtungen (SU-KE) für den Anschluß an ein analoges Kommunikationsendgerät (KE-A), und
- in der kommunikationssystemseitigen Endgeräte-Emulationseinrichtung (KPNE-KS) eine Anschlußeinrichtung (SU-KE) für den Anschluß an einen analogen Eingang (EA) eines privaten Kommunikationssystems (KS) vorgesehen ist.

3. Anordnung nach Anspruch 2,
dadurch **gekennzeichnet**,
- daß kommunikationsnetzseitig in dem Endgeräte-Emulationseinrichtungspaar (PNEP) jeweils eine Anschlußeinrichtung (SU-FE) für den Anschluß an ein analoges Fernsprechkommunikationsnetz (FE) vorgesehen ist,
- daß im Endgeräte-Emulationseinrichtungspaar (PNEP) jeweils eine Verbindungssteuerung (VST) mit einem Verbindungsschalter (VSC) vorgesehen ist,
-- mit deren Hilfe bei einer Kommunikationssystem- oder kommunikationsendgeräteseitigen Verbindungsanforderung eine Verbindung über das öffentliche Fernsprechkommunikationsnetz (FE) zur zugeordneten Engdgeräte-Emulationseinrichtung (KPNE) aufgebaut wird,
-- wobei jeweils von der initialisierenden Endgeräte-Emulationseinrichtung (KPNE) eine analoge Identifikationsinformation an die zugeordnete Endgeräte-Emulationseinrichtung (KPNE) übermittelt und dort nach einer Überprüfung des Empfangs der Identifikationsinformation die Verbindung zum Kommunikationsendgerät (KE-A) bzw. dem Kommunikationssystem (KS) durchgeschaltet wird.

4. Kommunikationsanordnung nach Anspruch 2,
dadurch **gekennzeichnet**,
- daß kommunikationsnetzseitig in dem Endgeräte-Emulationseinrichtungspaar (PNEP) jeweils eine Anschlußeinrichtung (LT) für den Anschluß an ein digitales Fernsprechkommunikationsnetz (ISDN) vorgesehen ist,
- daß im Endgeräte-Emulationseinrichtungspaar (PNEP) jeweils eine Verbindungssteuerung (VST) mit einem Verbindungsschalter (VSC) sowie eine Analog/Digital-Umsetzeinrichtung (CODEC) vorgesehen ist,
- mit deren Hilfe bei einer Kommunikationssystem- oder kommunikationsendgeräteseitigen Verbindungsanforderung eine Verbindung über das öffentliche, digitale Fernsprechkommunikationsnetz (ISDN) zur zugeordneten Endgeräte-Emulationseinrichtung (KPNE) aufgebaut wird,
- wobei jeweils von der initialisierenden Endgeräte-Emulationseinrichtung (KPNE) eine digitale Identifikationsinformation an die zugeordnete Endgeräte-Emulationseinrichtung (KPNE) übermittelt, und dort nach einer Überprüfung des Empfang der digitalen Identifikationsinformation die Verbindung zum Kommunikationsendgerät (KE) bzw. dem Kommunikationssystem (KS) durchgeschaltet wird.

5. Kommunikationsanordnung nach Anspruch 1,
dadurch **gekennzeichnet,**
- daß in der kommunikationsendgeräteseitigen Endgeräte-Emulationseinrichtung (KPNE-KE) eine Anschlußeinrichtung (LT-D) für den Anschluß an ein digitales, zumindest einen Nachrichtenkanal (B) und einen Signalisierungskanal (D) aufweisendes Kommunikationsendgerät (KE-D), und
- in der kommunikationssystemseitigen Endgeräte-Emulationseinrichtung (KPNE-KS) eine Anschlußeinrichtung (LT-D) für den Anschluß an einen digitalen, zumindest einen Nachrichtenkanal (B) und einen Signalisierungskanal (D) aufweisenden Eingang (ED) eines Kommunikationssystem (KS) vorgesehen ist.

6. Kommunikationsanordnung nach Anspruch 5,
dadurch **gekennzeichnet,**
- daß kommunikationsnetzseitig in dem Endgeräte-Emulationseinrichtungspaar (PNEP) zumindest eine jeweils einen Nachrichtenkanal (B) realisierende Anschlußeinrichtung (SA-FE) für den Anschluß an ein analoges Fernsprechkommunikationsnetz (FE) und eine den zusätzlichen Signalisierungskanal (DZ) realisierende Anschlußeinrichtung (SAE) für den Anschluß an ein digitales Datenkommunikationsnetz (IDN) vorgesehen ist,
- daß im Endgeräte-Emulationseinrichtungspaar (PNEP) jeweils eine Verbindungssteuerung (VST) mit einem Verbindungsschalter (VSC) und eine Nachrichteninformationen umsetzende Digital/-Analog-Umsetzeinrichtung (CODEC) vorgesehen ist,
- mit deren Hilfe bei einer Kommunikationssystem- oder kommunikationsendgeräteseitigen Verbindungsanforderung jeweils eine Verbindung über das öffentliche, analoge Fernsprechkommunikationsnetz (FE) und über das Datenkommunikationsnetz (IDN) zur zugeordneten Endgeräte-Emulationseinrichtung (KPNE) aufgebaut wird,
- wobei jeweils von der initialisierenden Endgeräte-Emulationseinrichtung (KPNE) eine analoge und eine digitale Identifikationsinformation an die zugeordnete Endgeräte-Emulationseinrichtung (KPNE) übermittelt, und dort nach einer Überprüfung des Empfang beider Identifikationsinformationen die Verbindung zum Kommunikationsendgerät (KE) bzw. dem Kommunikationssystem (KS) durchgeschaltet wird.

7. Kommunikationsanordnung nach Anspruch 5,
dadurch **gekennzeichnet**,
- daß kommunikationsnetzseitig in dem Endgeräte-Emulationseinrichtungspaar (PNEP) jeweils zumindest eine einen Nachrichtenkanal (B) realisierende Anschlußeinrichtung (SA-FE) für den Anschluß an ein analoges Fernsprechkommunikationsnetz (FE) und zusätzliche, den zusätzlichen Signalisierungskanal (DZ) im Nachrichtenkanal (B) realisierende Mittel (KOMP) vorgesehen sind,
- daß im Endgeräte-Emulationseinrichtungspaar (PNEP) jeweils eine Verbindungssteuerung (VST) mit einem Verbindungsschalter (VSC) vorgesehen ist,
-- mit deren Hilfe bei einer Kommunikationssystem- oder kommunikationsendgeräteseitigen Verbindungsanforderung jeweils eine Verbindung über das öffentliche, analoge Fernsprechkommunikationsnetz (FE) zur zugeordneten Engdgeräte-Emulationseinrichtung (KPNE) aufgebaut wird,
-- wobei jeweils von der initialisierenden Endgeräte-Emulationseinrichtung (KPNE) eine analoge Identifikationsinformation an die zugeordnete Endgeräte-Emulationseinrichtung (KPNE) übermittelt, und dort nach einer Überprüfung des Empfang der Identifikationsinformation die Verbindung zum Kommunikationsendgerät (KE) bzw. dem Kommunikationssystem (KS) durchgeschaltet wird.

8. Kommunikationsanordnung nach Anspruch 7,
dadurch **gekennzeichnet**,
- daß die zusätzlichen Mittel durch einen die vom Kommunikationsendgerät (KE) oder Kommunikationssystem (KS) übermittelten digitalen Sprachsignale komprimierenden bzw. dekomprimierenden Komprimierer (KOMP) sowie einer nachgeschalteten Multiplexeinrichtung (MUX) realisiert sind, wobei die über den Signalisierungskanal (DZ) übermittelten Signalisierungsinformationen (si) mit Hilfe der Verbindungssteuerung (VST) an die Multiplexeinrichtung (MUX) gesteuert und in dieser zusammen mit den komprimierten, digitalen Sprachsignalen zu einem digitalen, fernsprechkanalgerechten Bitstrom gemultiplext bzw. umgekehrt demultiplext werden, und
- daß die zusätzlichen Mittel des weiteren durch einen nachgeschalteten die Digital/Analogwandlung bzw. Analog/Digitalwandlung des Bitstroms bzw. der analogen Signale bewirkenden Modem (MOD) realisiert sind.

9. Kommunikationsanordnung nach Anspruch 5,
dadurch **gekennzeichnet,**
- daß kommunikationsnetzseitig in dem Endgeräte-Emulationseinrichtungspaar (PNEP) zumindest eine jeweils einen Nachrichtenkanal (B) realisierende Anschlußeinrichtung (LT-D) für den Anschluß an ein digitales Fernsprechkommunikationsnetz (ISDN) und eine den zusätzlichen Signalisierungskanal (DZ) realisierende Anschlußeinrichtung (SAE) für den Anschluß an ein digitales Datenkommunikationsnetz (IDN) vorgesehen ist,
- daß im Efldgeräte-Emulationseinrichtungspaar (PNEP) jeweils eine Verbindungssteuerung (VST) mit einem Verbindungsschalter (VSC) vorgesehen ist,
-- mit deren Hilfe bei einer Kommunikationssystem- oder kommunikationsendgeräteseitigen Verbindungsanforderung zumindest eine Verbindung über das öffentliche, digitale Fernsprechkommunikationsnetz (ISDN) und eine Verbindung über das Datenkommunikationsnetz (IDN) zur zugeordneten Endgeräte-Emulationseinrichtung (KPNE) aufgebaut wird,
-- wobei jeweils von der initialisierenden Endgeräte-Emulationseinrichtung (KPNE) jeweils eine digitale Identifikationsinformation über das digitale Fernsprechkommunikationsnetz (ISDN) und Datenkommunikationsnetz (IDN) an die zugeordnete Endgeräte-Emulationseinrichtung (KPNE) übermittelt, und dort nach einer Überprüfung des Empfang beider Identifikationsinformationen die Verbindung zum Kommunikationsendgerät (KE) bzw. dem Kommunikationssystem (KS) durchgeschaltet wird.

10. Kommunikationsanordnung nach Anspruch 5,
dadurch **gekennzeichnet**,
- daß kommunikationsnetzseitig in dem Endgeräte-Emulationseinrichtungspaar (PNEP) jeweils zumindest eine einen Nachrichtenkanal (B) realisierende Anschlußeinrichtung (LT) für den Anschluß an ein digitales Fernsprechkommunikationsnetz (ISDN) und zusätzliche, den zusätzlichen Signalisierungskanal (DZ) in einem Nachrichtenkanal (B) realisierende Mittel vorgesehen sind,
- daß im Endgeräte-Emulationseinrichtungspaar (PNEP) jeweils eine Verbindungssteuerung (VST) mit einem Verbindungsschalter (VSC) vorgesehen ist,
-- mit deren Hilfe bei einer Kommunikationssystem- oder kommunikationsendgeräteseitigen Verbindungsanforderung jeweils eine Wählverbindung über das öffentliche, digitale Fernsprechkommunikationsnetz (ISDN) zur zugeordneten Endgeräte-Emulationseinrichtung (KPNE) aufgebaut wird,
-- wobei jeweils von der initialisierenden Endgeräte-Emulationseinrichtung (KPNE) eine digitale Identifikationsinformation an die zugeordnete Endgeräte-Emulationseinrichtung (KPNE) übermittelt, und dort nach einer Überprüfung des Empfangs der Identifikationsinformation die Verbindung zum Kommunikationsendgerät (KE) bzw. dem Kommunikationssystem (KS) durchgeschaltet wird.

11. Kommunikationsanordnung nach Anspruch 10,
dadurch **gekennzeichnet**,
- daß die zusätzlichen Mittel durch einen die vom Kommunikationsendgerät (KE) oder Kommunikationssystem (KS) übermittelten digitalen Sprachsignale komprimierenden bzw. dekomprimierenden Komprimierer (KOMP) sowie einer nachgeschalteten Multiplexeinrichtung (MUX) realisiert sind, wobei die über den Signalisierungskanal (DZ) übermittelten Signalisierungsinformationen mit Hilfe der Verbindungssteuerung (VST) an die Multiplexeinrichtung (MUX) gesteuert und in dieser zusammen mit den komprimierten, digitalen Sprachsignalen zu einem digitalen, fernsprechkanalgerechten Bitstrom gemultiplext bzw. umgekehrt demultiplext werden.

12. Kommunikationsanordnung nach einem der vorhergehenden Ansprüche,
dadurch **gekennzeichnet**,
daß die Anschlußeinrichtung (SAE) für den Anschluß an ein digitales Datenkommunikationsnetz (IDN) durch eine Anschlußeinrichtung für den Anschluß an den Paketdienst im Signalisierungskanal (D) des digitalen Fernsprechkommunikationsnetzes (ISDN) realisiert ist, und daß die Verbindungssteuerung (VST) entsprechend der ISDN-Signalisierung ausgestaltet ist.

13. Kommunikationsanordnung nach einem der vorhergehenden Ansprüche,
dadurch **gekennzeichnet**,
daß das digitale Datenkommunikationsnetz (IDN) durch ein Paketkommunikationsnetz oder durch ein synchrones Datenkommunikationsnetz realisiert ist, und daß die Anschlußeinrichtungen (SAE) einschließlich der Schnittstellen (X.21,X.25) und die Verbindungssteuerungen (VST) entsprechend ausgestaltet sind.

14. Kommunikationsanordnung nach einem der vorhergehenden Ansprüche,
dadurch **gekennzeichnet**,
daß im Emulationseinrichtungpaar (PNEP) Einrichtungen zum Bilden von analogen oder digitalen Identifikationsinformationen vorgesehen sind, wobei die Identifikationsinformationen eine fortlaufende numerische Informationen sowie eine die Zuordnung der Endgeräte-Emulationseinrichtungpaare (PNEP) anzeigende Kennungsinformation umfaßt.

15. Kommunikationsanordnung nach einem der vorhergehenden Ansprüche,
dadurch **gekennzeichnet**,
daß die von öffentlichen, digitalen Kommunikationsnetzen (ISDN,IDN) oder von mit digitalen Kommunikationssystemen (KS) ausgestatteten öffentlichen, analogen Fernsprechkommunikationsnetzen (FE) übermittelten, Identifikationsinformationen repräsentierende Rufnummern der rufenden Kommunikationsendgeräte (KE) in die Überprüfung des endgeräte-emulationseinrichtungspaar-gerechten Verbindungsherstellung einbezogen werden.

16. Kommunikationsanordnung nach einem der vorhergehenden Ansprüche,
dadurch **gekennzeichnet**,
daß im Sinne der Realisierung einer Überprüfungsprozedur Überprüfungseinrichtungen im Endgeräte-Emulationseinrichtungspaar (KPNE) vorgesehen sind, mit deren Hilfe in den benachbarten Endgeräte-Emulationseinrichtungen (KPNE) gebildete analoge oder digitale und/oder von den öffentlichen Kommuniationesnetzen (FE, ISDN) übermittelte Identifikationsinformationen hinsichtlich der emulationseinrichtungpaar-gerechten Verbindungsherstellung überprüft und anschließend eine die Durchschaltung zum privaten Kommunikationsendgerät (KE) bzw. zum Kommunikationssystem (KS) bewirkende Information übermittelt wird.

17. Kommunikationsanordnung nach einem der vorhergehenden Ansprüche,
dadurch **gekennzeichnet,**
daß die kommunikationsendgeräteseitige Endgeräte-Emulationseinrichtung (KPNE-KE) und die angeschlossenen Kommunikationsendgeräte (KE) mit zusätzlichen Tasten (VT) und Mitteln zu deren direkten Verbindung mit Kommunikationsendgeräten des öffentlichen Wähl-Kommunikationsnetzes (FE,ISDN,IDN) ausgestattet sind.
